# FASCICULE DE BREVET EUROPEEN

(11) **EP 1 247 694 B1**
(45) Date de publication et mention de la délivrance du brevet: **09.06.2004**
(21) Numéro de dépôt: 02290746.3
(22) Date de dépôt: 25.03.2002
(51) Int. Cl.: B60R 9/058, F16B 2/12

(54) **Dispositif de fixation notamment d'une barre transversale sur un toit de véhicule automobile**
Befestigungsvorrichtung, insbesondere eines Querstabes auf einem Kraftfahrzeugdach
Fixing device especially for a transversal bar on an automobile roof

(30) Priorité: 05.04.2001 FR 0104648
(43) Date de publication de la demande: 09.10.2002
(73) Titulaire: Sinto Auto, 35400 Saint Malo (FR)
(72) Inventeur: Ringeard, Thierry, 35400 Saint-Malo (FR)
(74) Mandataire: Bentz, Jean-Paul

(56) Documents cités:
- EP-A- 0 423 815
- DE-A- 4 027 452
- DE-C- 4 308 808
- FR-A- 2 631 905
- FR-A- 2 752 793

## Description

L'invention concerne, de façon générale, un dispositif de fixation d'une seconde pièce sur une première pièce, par exemple d'une barre transversale sur un toit de véhicule automobile.

Bien que connus depuis longtemps, ces dispositifs continuent de faire l'objet de nouveaux développements, qui visent notamment à augmenter la valeur de la force d'arrachement à laquelle ils peuvent résister, tout en diminuant leur encombrement, en particulier en réduisant les contraintes dimensionnelles requises pour leur implantation.

Un dispositif de fixation ayant les caractéristiques du préambule de la revandication 1 est décrit dans le document DE-A-4 027 452.

L'invention a précisément pour but de proposer un dispositif de fixation répondant à ce besoin.

A cette fin, le dispositif de l'invention, par ailleurs conforme à la définition générique qu'en donne le préambule ci-dessus, est essentiellement caractérisé en ce qu'il comprend : des première et seconde rainures coplanaires, solidaires de la première pièce, s'ouvrant dans des directions respectives opposées, et disposées symétriquement par rapport à un plan médian, ces première et seconde rainures présentant des premier et second rebords respectifs séparés l'un de l'autre par une première distance, et des premier et second fonds séparés l'un de l'autre par une seconde distance inférieure à la première ; des première et seconde glissières sensiblement coplanaires, solidaires de la seconde pièce, disposées symétriquement par rapport au plan médian, présentant des première et seconde extrémités écartées respectives, respectivement adjacentes aux première et seconde rainures, et des première et seconde extrémités rapprochées respectives, ces glissières convergeant l'une vers l'autre en direction de leurs extrémités rapprochées ; des premier et second coulisseaux montés respectivement coulissants dans les première et seconde glissières dans lesquelles ils adoptent des première et seconde positions de translation respectives, ces premier et second coulisseaux présentant des première et seconde extrémités d'accrochage respectives et des première et seconde extrémités de traction respectives, les première et seconde extrémités d'accrochage respectives étant conformées en premier et second crochets respectifs saillant des extrémités écartées respectives des première et seconde glissières, étant tournés l'un vers l'autre, et étant écartés l'un de l'autre par une distance variable dépendant des première et seconde positions de translation, et les première et seconde extrémités de traction respectives saillant des extrémités rapprochées respectives des première et seconde glissières ; et des moyens de traction coopérant sélectivement avec les extrémités de traction respectives des premier et second coulisseaux, les premier et second coulisseaux étant sélectivement déplacés, dans les glissières respectives, entre des première et seconde positions de translation de déverrouillage respectives, dans lesquelles les crochets sont séparés l'un de l'autre par une distance supérieure à la première distance, et des première et seconde positions de translation de verrouillage respectives, dans lesquelles les moyens de traction retiennent les extrémités de traction respectives des premier et second coulisseaux tandis que les crochets sont insérés dans les première et seconde rainures respectives et séparés l'un de l'autre par une distance comprise entre les première et seconde distances.

Les moyens de traction peuvent par exemple comprendre une traverse reliant les extrémités de traction des coulisseaux et par rapport à laquelle ces extrémités de traction sont montées coulissantes.

De préférence, les moyens de traction sont conçus pour pouvoir déplacer sélectivement les premier et second coulisseaux entre leurs positions de translation de déverrouillage respectives et leurs positions de translation de verrouillage respectives.

Pour ce faire, les moyens de traction comprennent par exemple un mécanisme d'entraînement à vis et à écrou, ou un mécanisme d'entraînement à came excentrique mue par un levier pivotant.

Néanmoins, les moyens de traction peuvent aussi avoir pour seule fonction de maintenir les coulisseaux en position de verrouillage et comprendre un crochet de retenue basculant, coopérant sélectivement avec un oeil ou un relief de retenue, ou une tige montée sélectivement coulissante dans une bague de blocage élastiquement sollicitée vers une position oblique par rapport à la tige.

Les première et seconde glissières peuvent être définies dans une même troisième pièce.

Dans ce cas, le dispositif de l'invention peut être appliqué à la fixation d'une barre transversale sur un toit de véhicule automobile de façon telle que le plan médian soit un plan transversal au véhicule, que la première pièce soit constituée par le toit du véhicule, que la deuxième pièce soit constituée par la barre, que les première et seconde rainures soient définies par une quatrième pièce à section en queue d'aronde solidaire du toit, cette application mettant en oeuvre un couple de troisièmes pièces fixées à des extrémités respectives de la barre, et un couple de quatrièmes pièces fixées au toit en regard des extrémités respectives de la barre.

Néanmoins, le dispositif de l'invention peut aussi être appliqué à la fixation d'une barre transversale sur un toit de véhicule automobile de façon telle que le plan médian soit un plan longitudinal au véhicule, que la première pièce soit constituée par le toit du véhicule, que la deuxième pièce soit constituée par la barre, que les première et seconde glissières soient respectivement définies dans deux pièces formant un couple de troisièmes pièces fixées à des extrémités respectives de la barre, et que les première et seconde rainures soient respectivement définies par deux pièces formant un couple de quatrièmes pièces fixées au toit en regard des extrémités respectives de la barre.

D'autres caractéristiques et avantages de l'invention ressortiront clairement de la description qui en est faite ci-après, à tire indicatif et nullement limitatif, en référence aux dessins annexés, dans lesquels :
- la figure 1 est une vue en coupe partielle d'un dispositif conforme à un premier mode de réalisation possible de l'invention, appliqué à la fixation d'une barre sur un toit de véhicule automobile, la coupe étant réalisée dans un plan parallèle à l'axe longitudinal du véhicule, et les coulisseaux étant représentés en position de déverrouillage;
- la figure 2 est une vue en coupe partielle semblable à la figure 1, les coulisseaux étant représentés en position de verrouillage;
- la figure 3 est une vue en coupe partielle du dispositif illustré aux figures 1 et 2, la coupe étant réalisée dans un plan transversal à l'axe longitudinal du véhicule;
- la figure 4 est une vue en coupe partielle d'un dispositif conforme à un second mode de réalisation possible de l'invention, appliqué à la fixation d'une barre sur un toit de véhicule automobile, la coupe étant réalisée dans un plan parallèle à l'axe longitudinal du véhicule, et les coulisseaux étant représentés en position de verrouillage;
- la figure 5 est une vue en coupe partielle du dispositif illustré à la figure 4, la coupe étant réalisée dans un plan transversal à l'axe longitudinal du véhicule;
- la figure 6 est une vue en coupe partielle d'un dispositif conforme à un troisième mode de réalisation possible de l'invention, appliqué à la fixation d'une barre sur un toit de véhicule automobile, la coupe étant réalisée dans un plan parallèle à l'axe longitudinal du véhicule, et les coulisseaux étant représentés en position de verrouillage;
- la figure 7 est une demie vue en coupe partielle du dispositif illustré à la figure 6, la coupe étant réalisée dans un plan transversal à l'axe longitudinal du véhicule;
- la figure 8 est une vue en coupe partielle d'un dispositif conforme à un quatrième mode de réalisation possible de l'invention, appliqué à la fixation d'une barre sur un toit de véhicule automobile, la coupe étant réalisée dans un plan parallèle à l'axe longitudinal du véhicule, et les coulisseaux étant représentés en position de verrouillage;
- la figure 9 est une demie vue en coupe partielle du dispositif illustré à la figure 8, la coupe étant réalisée dans un plan transversal à l'axe longitudinal du véhicule;
- la figure 10 est une vue de dessus de la traverse utilisée dans le dispositif illustré aux figures 8 et 9;
- la figure 11 est une vue de côté d'un coulisseau utilisé dans le dispositif illustré aux figures 8 et 9;
- la figure 12 est une vue en coupe partielle d'un dispositif conforme à un cinquième mode de réalisation possible de l'invention, appliqué à la fixation d'une barre sur un toit de véhicule automobile, la coupe étant réalisée dans un plan transversal à l'axe longitudinal du véhicule, et les coulisseaux étant représentés en position de déverrouillage;
- la figure 13a est une demie vue en coupe partielle d'un dispositif conforme à un sixième mode de réalisation possible de l'invention, appliqué à la fixation d'une barre sur un toit de véhicule automobile, la coupe étant réalisée dans un plan transversal à l'axe longitudinal du véhicule, et les coulisseaux étant représentés en position limite de déverrouillage;
- la figure 13b, semblable à la figure 13a, représente le dispositif dans la configuration qu'il adopte lorsque les coulisseaux sont en position de verrouillage;
- la figure 14 est une demie vue en coupe partielle d'un dispositif conforme à un septième mode de réalisation possible de l'invention, appliqué à la fixation d'une barre sur un toit de véhicule automobile, la coupe étant réalisée dans un plan transversal à l'axe longitudinal du véhicule, et les coulisseaux étant représentés en position limite de déverrouillage;
- la figure 15 est une demie vue en coupe partielle d'un dispositif conforme à un huitième mode de réalisation possible de l'invention, appliqué à la fixation d'une barre sur un toit de véhicule automobile, la coupe étant réalisée dans un plan transversal à l'axe longitudinal du véhicule, et les coulisseaux étant représentés en position limite de déverrouillage.

Comme annoncé précédemment, l'invention concerne un dispositif de fixation d'une seconde pièce 2 sur une première pièce 1, la seconde pièce 2 étant, sur les figures, constituée par une barre transversale, et la première pièce 1 par le toit ou pavillon d'un véhicule automobile sur lequel cette barre doit être fixée.

Quel que soit son mode de réalisation, ce dispositif comprend essentiellement des rainures telles que 3a et 3b, des glissières telles que 4a et 4b, des coulisseaux tels que 5a et 5b, et des moyens ou organes de traction 6.

Les rainures 3a et 3b sont au moins sensiblement coplanaires et solidaires du toit 1.

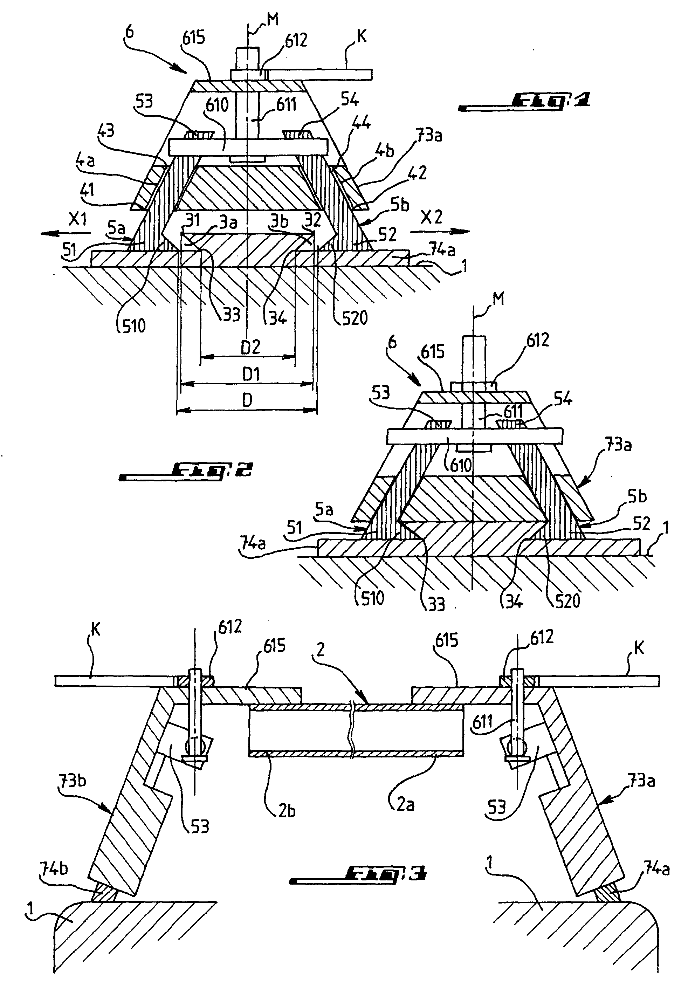

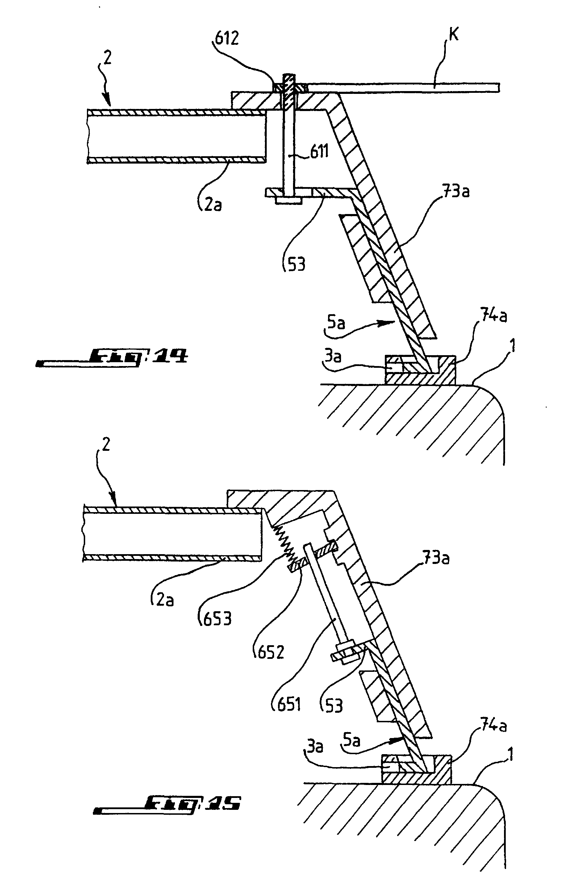

Ces rainures 3a et 3b sont disposées symétriquement par rapport à un plan médian M de manière à s'ouvrir dans des directions respectives opposées X1 et X2, le plan médian M étant transversal au véhicule pour les modes de réalisation des figures 1 à 11, et longitudinal par rapport au véhicule pour les modes de réalisation des figures 12 à 15.

Par ailleurs, les rainures 3a et 3b présentent des rebords respectifs, 31 et 32, séparés l'un de l'autre par une distance D1, et de fonds respectifs, 33 et 34, séparés l'un de l'autre par une seconde distance D2 inférieure à la première distance D1.

Les glissières 4a et 4b, qui sont elles-mêmes sensiblement coplanaires, sont solidaires de la barre 2 et disposées symétriquement par rapport au plan médian M.

Les glissières 4a et 4b présentent d'une part des extrémités écartées respectives, 41 et 42, qui sont tournées vers les rainures correspondantes 3a et 3b, et d'autre part des extrémités rapprochées respectives 43 et 44, distantes des extrémités écartées 41 et 42, ces glissières 4a et 4b convergeant l'une vers l'autre en direction de leurs extrémités rapprochées 43 et 44.

Les coulisseaux 5a et 5b sont respectivement montés coulissants dans les glissières 4a et 4b, dans lesquelles ils adoptent des positions de translation respectives

Ces coulisseaux présentent des extrémités d'accrochage respectives, 51 et 52, et des extrémités de traction respectives 53 et 54.

Les extrémités d'accrochage 51 et 52 sont conformées en crochets respectifs, 510 et 520, qui font saillie des extrémités écartées correspondantes 41 et 42 des glissières 4a et 4b, qui sont tournés l'un vers l'autre, et qui sont écartés l'un de l'autre par une distance D variable, cette distance D dépendant des positions de translation adoptées par les coulisseaux 5a et 5b dans les glissières 4a et 4b.

Les extrémités de traction 53 et 54 des coulisseaux 5a et 5b font quant à elles saillie des extrémités rapprochées 43 et 44 des glissières correspondantes 4a et 4b.

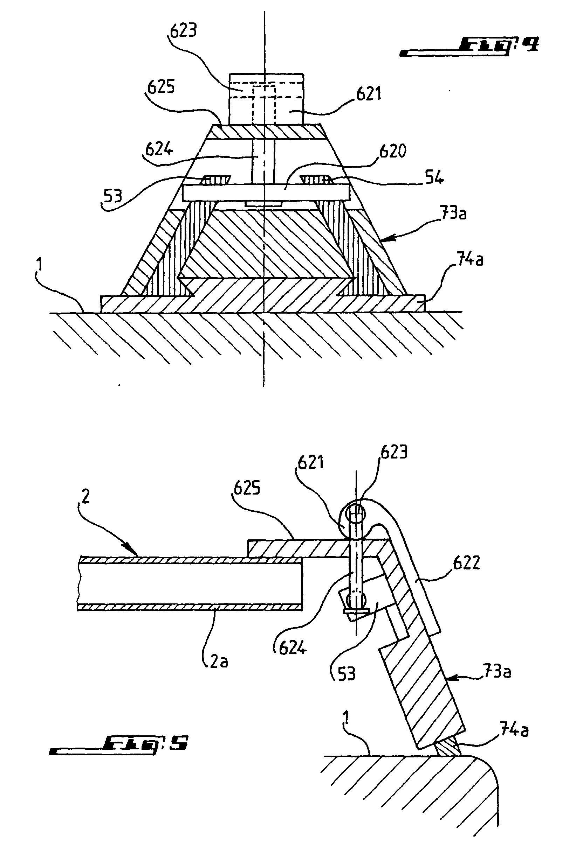

Grâce à cet agencement, chacun des coulisseaux 5a et 5b peut être déplacé, dans la glissière correspondante 4a ou 4b, entre une position de translation de déverrouillage, dans laquelle les crochets 510 et 520 sont séparés l'un de l'autre par une distance D supérieure à la distance D1 séparant les rebords 31 et 32 des rainures 3a et 3b (figures 1 et 12 à 15), et une position de translation de verrouillage, dans laquelle les crochets 510 et 520 sont insérés dans les rainures respectives 3a et 3b et séparés l'un de l'autre par une distance D intermédiaire entre la distance D1 et la distance D2 séparant les fonds 33 et 34 de ces rainures (figures 2, 4, 6 et 8).

Dans les modes de réalisation illustrés aux figures 1 à 11, le plan médian M par rapport auquel les rainures 3a et 3b sont symétriques est un plan transversal au véhicule, et les rainures de chaque couple de rainures 3a et 3b sont par exemple définies par une pièce, telle que 74a ou 74b (figures 1 à 3), présentant une section en queue d'aronde et formée ou fixée sur un bord du toit 1 par tout moyen approprié.

Par ailleurs, les glissières de chaque couple de glissières 4a et 4b sont définies dans une même pièce, telle que 73a ou 73b, qui porte donc un couple correspondant de coulisseaux 5a et 5b, chaque pièce telle que 73a ou 73b étant fixée à une extrémité correspondante 2a ou 2b de la barre 2.

Pour permettre la fixation de la barre 2 sur le toit 1, le dispositif de l'invention comprend donc un couple de pièces 73a et 73b, et un couple de pièces 74a et 74b disposées en regard des extrémités correspondantes 2a et 2b de la barre 2.

Dans les modes de réalisation illustrés aux figures 12 à 15, le plan médian M par rapport auquel les rainures 3a et 3b sont symétriques est un plan longitudinal au véhicule et les glissières 4a et 4b sont définies dans deux pièces différentes, 73a et 73b, dont chacune est fixée à une extrémité correspondante, telle que 2a ou 2b, de la barre 2.

Par ailleurs, les rainures 3a et 3b sont définies par deux pièces différentes, 74a et 74b, dont chacune est formée ou fixée sur un bord du toit 1 par tout moyen approprié en regard de l'extrémité correspondante, telle que 2a ou 2b, de la barre 2.

Les organes de traction 6, qui seront détaillés ultérieurement, ont au moins pour fonction de coopérer avec les extrémités de traction 53 et 54 des coulisseaux 5a et 5b pour maintenir ces derniers dans leur position de translation de verrouillage.

Il est cependant possible de prévoir que les organes de traction 6 assurent également le déplacement de chacun des coulisseaux 5a et 5b entre sa position de déverrouillage et sa position de verrouillage.

Dans le mode de réalisation illustré aux figures 1 à 3, les organes de traction 6 comprennent une traverse 610 et un mécanisme d'entraînement incluant une vis 611 et un écrou 612 manoeuvrable par une manette K.

La traverse 610 est engagée à libre coulissement dans les extrémités de traction respectives 53 et 54 des coulisseaux 5a et 5b tandis que la vis 611 est reliée à la traverse 610, par rapport à laquelle elle est bloquée en rotation, et sur laquelle elle est en butée en translation.

Pour chacune des pièces 73a et 73b, la vis 611 traverse un voile 615 de cette pièce, sur lequel l'écrou 612 prend appui, de sorte que l'entraînement en rotation de l'écrou 612 par la manette K entraîne le déplacement en translation des coulisseaux 5a et 5b dans les glissières correspondantes 4a et 4b par l'intermédiaire de la vis 611 et de la traverse 610.

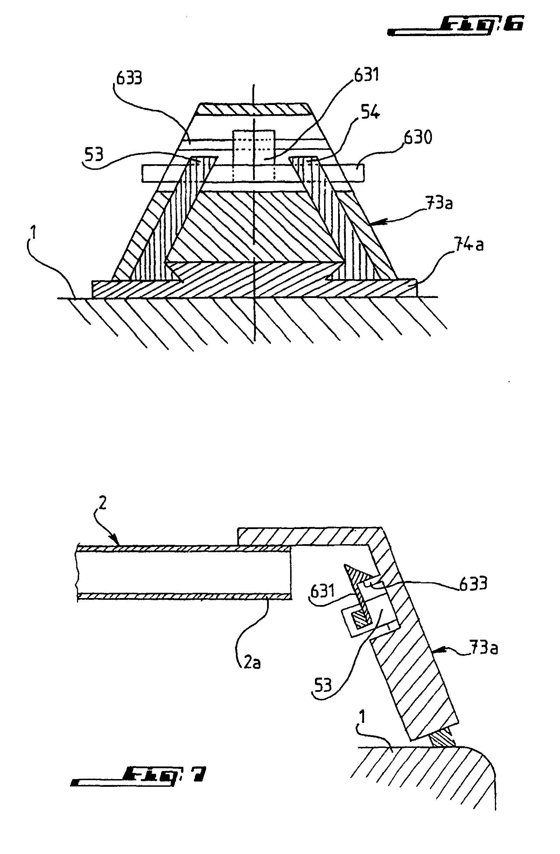

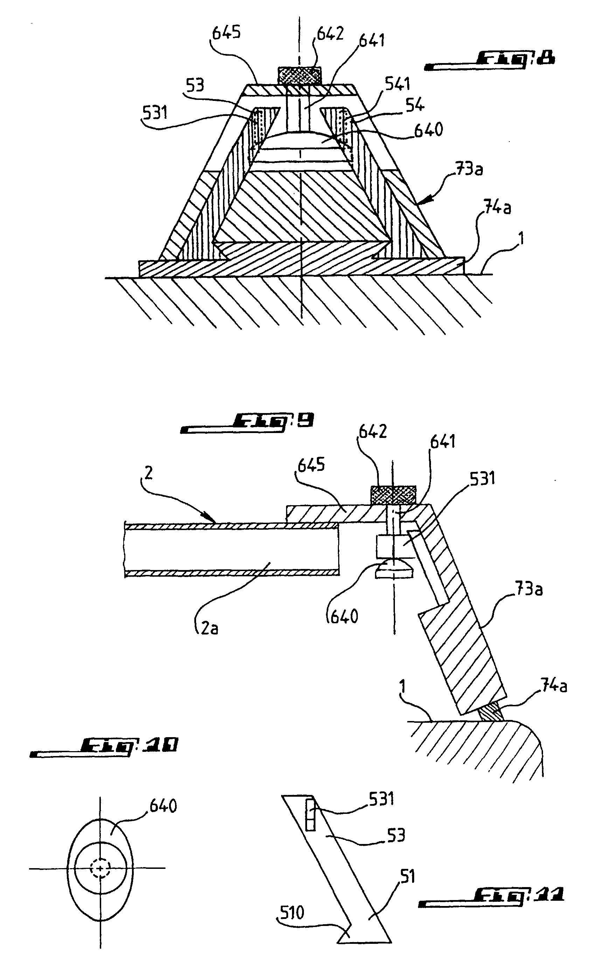

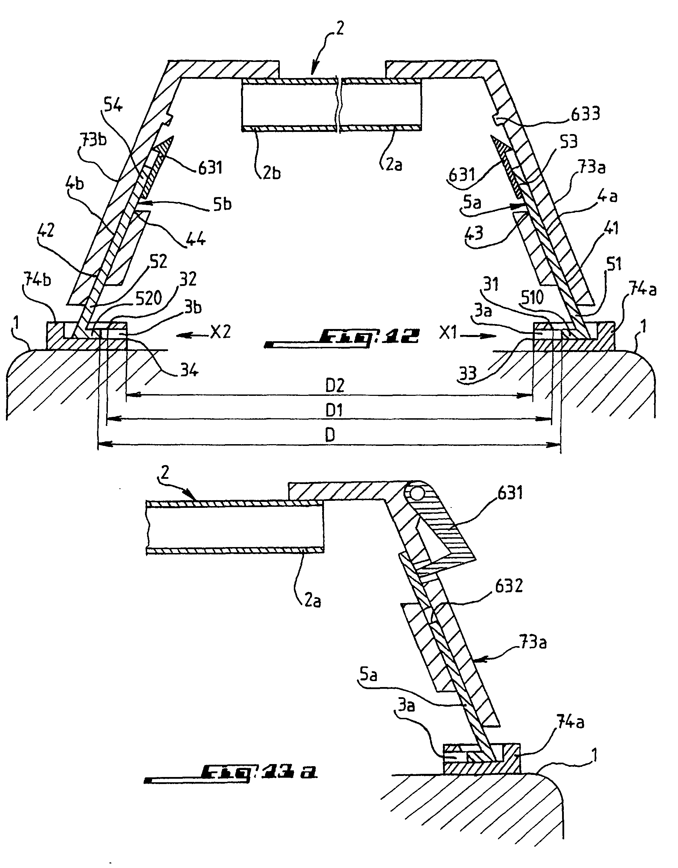

Dans le mode de réalisation illustré aux figures 4 et 5, les organes de traction 6 comprennent une traverse 620 et un mécanisme d'entraînement comprenant une came excentrique 621 et un levier pivotant 622.

La traverse 620 est engagée à libre coulissement dans les extrémités de traction respectives 53 et 54 des coulisseaux 5a et 5b et reliée à l'axe 623 de la came 621 par une tige 624.

Pour chacune des pièces 73a et 73b, la came 621, qui est solidaire du levier 622, prend appui sur une surface 625 de cette pièce, de sorte que l'entraînement en rotation de la came 621 par le levier 622 entraîne le déplacement en translation des coulisseaux 5a et 5b dans les glissières correspondantes 4a et 4b par l'intermédiaire de l'axe 623 de la came 621, de la tige 624, et de la traverse 620.

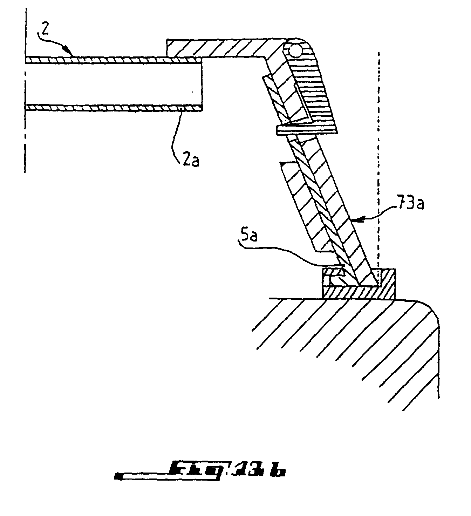

Dans le mode de réalisation illustré aux figures 6 et 7, les organes de traction 6 comprennent une traverse 630 et un mécanisme de retenue incluant un crochet de retenue basculant 631 et un relief de retenue 633.

La traverse 630 est engagée à libre coulissement dans les extrémités de traction respectives 53 et 54 des coulisseaux 5a et 5b et reliée au crochet basculant 631.

Pour chacune des pièces 73a et 73b, le crochet 631 est élastiquement sollicité vers le relief de retenue 633, qui est formé sur cette pièce.

Lorsque les coulisseaux 5a et 5b sont déplacés manuellement dans les glissières 4a et 4b de leur position de déverrouillage vers leur position de verrouillage, le crochet 631 vient s'encliqueter sur le relief de retenue 633, les coulisseaux étant alors maintenus dans leur position de verrouillage jusqu'à ce que le crochet soit manuellement désengagé du relief 633 et les coulisseaux déplacés vers leur position de déverrouillage.

Dans le mode de réalisation illustré aux figures 8 à 11, les organes de traction 6 comprennent une traverse 640 et un mécanisme d'entraînement incluant une vis 641 et un écrou 642 conformé en molette.

Les extrémités de traction respectives 53 et 54 des coulisseaux 5a et 5b portent des appuis 531 et 541, par lesquels il sont en contact sur la traverse 640, de forme bombée.

Pour chacune des pièces 73a et 73b, la vis 641 est solidaire de la traverse 640 et traverse un voile 645 de cette pièce, sur lequel l'écrou 642 prend appui.

L'entraînement en rotation de l'écrou 642 entraîne donc le déplacement en translation des coulisseaux 5a et 5b dans les glissières correspondantes 4a et 4b par l'intermédiaire de la vis 641 et de la traverse 640, au moins de la position de déverrouillage des coulisseaux vers leur position de verrouillage.

Dans le mode de réalisation de la figure 12, les organes de traction 6, qui sont semblables à ceux de la figure 7, comprennent un crochet de retenue basculant 631, conçu pour coopérer avec un relief de retenue 633 pour maintenir les coulisseaux dans leur position de verrouillage.

Dans le mode de réalisation des figures 13a et 13b, les organes de traction 6 comprennent, outre un crochet de retenue basculant 631, un oeil de retenue 632 percé dans chaque coulisseau 5a, 5b, et dans lequel le crochet 631 peut être engagé, grâce à l'inclinaison de la patte 73a, pour maintenir ce coulisseau dans sa position de verrouillage (figure 13b).

Dans le mode de réalisation de la figure 14, les organes de traction 6, qui sont voisins de ceux qu'illustre la figure 3, comprennent un mécanisme d'entraînement incluant une vis 611 et un écrou 612 manoeuvrable par une manette K.

Enfin, dans le mode de réalisation de la figure 15, les organes de traction 6 comprennent une tige 651 montée sélectivement coulissante dans une bague de blocage 652 élastiquement sollicitée vers une position oblique par rapport à la tige 651 au moyen d'un ressort 653.

## Revendications

1. Dispositif de fixation d'une seconde pièce (2) sur une première pièce (1) ayant
des première et seconde rainures (3a, 3b) coplanaires, solidaires de la première pièce (1), s'ouvrant dans des directions respectives opposées (X1, X2), et disposées symétriquement par rapport à un plan médian (M), ces première et seconde rainures (3a, 3b) présentant des premier et second rebords (31, 32) respectifs séparés l'un de l'autre par une première distance (D1), et des premier et second fonds (33, 34) séparés l'un de l'autre par une seconde distance (D2) inférieure à la première (D1), **caractérisé en ce qu'**il comprend :
des première et seconde glissières (4a, 4b) sensiblement coplanaires, solidaires de la seconde pièce (2), disposées symétriquement par rapport au plan médian (M), présentant des première et seconde extrémités écartées respectives (41, 42), respectivement adjacentes aux première et seconde rainures (3a, 3b), et des première et seconde extrémités rapprochées respectives (43, 44), ces glissières (4a, 4b) convergeant l'une vers l'autre en direction de leurs extrémités rapprochées (43, 44),
des premier et second coulisseaux (5a, 5b) montés respectivement coulissants dans les première et seconde glissières (4a, 4b) dans lesquelles ils adoptent des première et seconde positions de translation respectives, ces premier et second coulisseaux (5a, 5b) présentant des première et seconde extrémités d'accrochage respectives (51, 52) et des première et seconde extrémités de traction respectives (53, 54), les première et seconde extrémités d'accrochage respectives (51, 52) étant conformées en premier et second crochets respectifs (510, 520) saillant des extrémités écartées respectives (41, 42) des première et seconde glissières (4a, 4b), étant tournés l'un vers l'autre, et étant écartés l'un de l'autre par une distance (D) variable dépendant des première et seconde positions de translation, et les première et seconde extrémités de traction respectives (53, 54) saillant des extrémités rapprochées respectives (43, 44) des première et seconde glissières (4a, 4b),
et des moyens de traction (6) coopérant sélectivement avec les extrémités de traction respectives (53, 54) des premier et second coulisseaux (5a, 5b), les premier et second coulisseaux (5a, 5b) étant sélectivement déplacés, dans les glissières respectives (4a, 4b), entre des première et seconde positions de translation de déverrouillage respectives, dans lesquelles les crochets (510, 520) sont séparés l'un de l'autre par une distance (D) supérieure à la première distance (D1), et des première et seconde positions de translation de verrouillage respectives, dans lesquelles les moyens de traction (6) retiennent les extrémités de traction respectives (53, 54) des premier et second coulisseaux (5a, 5b) tandis que les crochets (510, 520) sont insérés dans les première et seconde rainures respectives (3a, 3b) et séparés l'un de l'autre par une distance (D) comprise entre les première et seconde distances (D1, D2).

2. Dispositif de fixation suivant la revendication 1, **caractérisé en ce que** les moyens de traction (6) comprennent une traverse (610) reliant les extrémités de traction (53, 54) des coulisseaux (5a, 5b) et par rapport à laquelle ces extrémités de traction (53, 54) sont montées coulissantes.

3. Dispositif de fixation suivant la revendication 1 ou 2, **caractérisé en ce que** les moyens de traction (6) déplacent sélectivement les premier et second coulisseaux (5a, 5b) entre leurs positions de translation de déverrouillage respectives et leurs positions de translation de verrouillage respectives.

4. Dispositif de fixation suivant la revendication 3, **caractérisé en ce que** les moyens de traction (6) comprennent un mécanisme d'entraînement à vis (611, 641) et à écrou (612, 642).

5. Dispositif de fixation suivant la revendication 3 ou 4, **caractérisé en ce que** les moyens de traction (6) comprennent un mécanisme d'entraînement à came excentrique (621) mue par un levier pivotant (622).

6. Dispositif de fixation suivant la revendication 1, **caractérisé en ce que** les moyens de traction (6) comprennent un crochet de retenue basculant (631), coopérant sélectivement avec un oeil (632) ou un relief de retenue (633).

7. Dispositif de fixation suivant la revendication 1, **caractérisé en ce que** les moyens de traction (6) comprennent une tige (651) montée sélectivement coulissante dans une bague de blocage (652) élastiquement sollicitée vers une position oblique par rapport à la tige (651).

8. Dispositif de fixation suivant l'une quelconque des revendications précédentes, **caractérisé en ce que** les première et seconde glissières (4a, 4b) sont définies dans une même troisième pièce (73a, 73b).

9. Application du dispositif de fixation suivant la revendication 8 à la fixation d'une barre transversale sur un toit de véhicule automobile, **caractérisée en ce que** le plan médian (M) est un plan transversal au véhicule, **en ce que** la première pièce (1) est constituée par le toit du véhicule, **en ce que** la deuxième pièce (2) est constituée par la barre, **en ce que** les première et seconde rainures (3a, 3b) sont définies par une quatrième pièce (74a, 74b) à section en queue d'aronde solidaire du toit (1), et **en ce qu'**elle met en oeuvre un couple de troisièmes pièces (73a, 73b) fixées à des extrémités respectives (2a, 2b) de la barre (2), et un couple de quatrièmes pièces (74a, 74b) fixées au toit en regard des extrémités respectives (2a, 2b) de la barre (2).

10. Application du dispositif de fixation suivant l'une quelconque des revendications 1 à 7 à la fixation d'une barre transversale sur un toit de véhicule automobile, **caractérisée en ce que** le plan médian (M) est un plan longitudinal au véhicule, **en ce que** la première pièce (1) est constituée par le toit du véhicule, **en ce que** la deuxième pièce (2) est constituée par la barre, **en ce que** les première et seconde glissières (4a, 4b) sont respectivement définies dans deux pièces formant un couple de troisièmes pièces (73a, 73b) fixées à des extrémités respectives (2a, 2b) de la barre (2) et **en ce que** les première et seconde rainures (3a, 3b) sont respectivement définies par deux pièces formant un couple de quatrièmes pièces (74a, 74b) fixées au toit (1) en regard des extrémités respectives (2a, 2b) de la barre (2).

## Patentansprüche

1. Vorrichtung zum Befestigen eines zweiten Teils (2) auf einem ersten Teil (1), mit
einer ersten und einer zweiten koplanaren Nut (3a, 3b), die jeweils fest mit dem ersten Teil (1) verbunden sind, sich in jeweils entgegengesetzte Richtungen (X1, X2) öffnen und symmetrisch bezüglich einer Mittelebene (M) angeordnet sind, wobei die erste und die zweite Nut (3a, 3b) jeweils einen ersten und einen zweiten Rand (31, 32) aufweisen, wobei die Ränder von einander um einen ersten Abstand (D1) getrennt sind, sowie einen ersten und einen zweiten Boden (33, 34), wobei die Böden um einen zweiten Abstand (D2) von einander getrennt sind, der niedriger als der erste Abstand (D1) liegt,
**dadurch gekennzeichnet, dass** eine erste und eine zweite Gleitschiene (4a, 4b) im wesentlichen koplanar vorgesehen sind, die fest mit dem zweiten Teil (2) verbunden und symmetrisch bezüglich der Mittelebene (M) angeordnet sind, wobei sie ein erstes und ein zweites Ende (41, 42) aufweisen und diese Enden voneinander beabstandet sind und jeweils der ersten und der zweiten Nut (3a, 3b) benachbart liegen, und ferner ein erstes und ein zweites Ende (43, 44), wobei diese Enden jeweils aneinander angenähert sind, wobei diese Gleitschienen (4a, 4b) in Richtung auf ihre aneinander angenäherten Enden (43, 44) hin auf einander zulaufen,
dass ein erstes und ein zweites Gleitstück (5a, 5b) jeweils gleitend in der ersten und der zweiten Gleitschiene (4a, 4b) angeordnet sind, in welcher sie eine jeweilige erste und eine jeweilige zweite Verschiebeposition einnehmen, wobei diese beiden Gleitstücke (5a, 5b) ein erstes und ein zweites jeweiliges Ankoppelende (51, 52) sowie ein erstes und ein zweites jeweiliges Zugende (53, 54) aufweisen, wobei die beiden jeweiligen Ankoppelenden (51, 52)Form eines jeweiligen ersten und zweiten Hakens (510, 520) ausgeformt sind, wobei die Haken über die jeweiligen beabstandeten Enden (41, 42) der ersten und zweiten Gleitschiene (4a, 4b) vorstehen, einander zugekehrt sind und von einander um einen Abstand (D) beabstandet sind, der in Abhängigkeit von der ersten und zweiten Verschiebeposition veränderlich ist, und wobei das erste und das zweite jeweilige Zugende (53, 54) über die jeweiligen aneinander angenäherten Enden (43, 44) der ersten und der zweiten Gleitschiene (4a, 4b) vorstehen,
und dass Zugeinrichtungen (6) vorgesehen sind, welche selektiv mit den jeweiligen Zugenden (53, 54) des ersten und des zweiten Gleitstücks (5a, 5b) zusammenwirken, wobei das erste und das zweite Zugstück (5a, 5b) selektiv in den jeweiligen Gleitschienen (4a, 4b) zwischen der ersten und der zweiten jeweiligen Verschiebeposition zur Entriegelung verlagerbar sind, in welcher die Haken (510, 520) um einen Abstand (D) von einander getrennt sind, der größer ist als der erste Abstand (D1), und einer ersten und einer zweiten jeweiligen Verschiebeposition zur Verriegelung, in welcher die Zugeinrichtungen (6) die jeweiligen Zugenden (53, 54) des ersten und des zweiten Gleitstücks (5a, 5b) halten, wohingegen die Haken (510, 520) in die erste und die zweite jeweilige Nut (3a, 3b) eingesetzt und um einen Abstand (D) von einander getrennt sind, der zwischen dem ersten und dem zweiten Abstand (D1, D2) liegt.

2. Befestigungsvorrichtung nach Anspruch 1, **dadurch gekennzeichnet, dass** die Zugeinrichtungen (6) einen Querträger (610) aufweisen, welcher die Zugenden (53, 54) der Gleitstücke (5a, 5b) verbindet und bezüglich dessen diese Zugenden (53, 54) gleitend angeordnet sind.

3. Befestigungsvorrichtung nach Anspruch 1 oder 2, **dadurch gekennzeichnet, dass** die Zugeinrichtungen (6) selektiv das erste und das zweite Gleitstück (5a, 5b) zwischen deren jeweiligen Verschiebepositionen zur Entriegelung und deren jeweiligen Verschiebepositionen zur Verriegelung verschieben.

4. Befestigungsvorrichtung nach Anspruch 3, **dadurch gekennzeichnet, dass** die Zugeinrichtungen (6) eine Antriebsmechanik mit Schraube (611, 641) und Mutter (612, 642) aufweisen.

5. Befestigungsvorrichtung nach Anspruch 3 oder 4, **dadurch gekennzeichnet, dass** die Zugeinrichtungen (6) eine Antriebsmechanik mit Exzenternocken (621) aufweisen, der von einem Kipphebel (622) bewegt wird.

6. Befestigungsvorrichtung nach Anspruch 1, **dadurch gekennzeichnet, dass** die Zugeinrichtungen (6) einen kippbaren Haltehaken (631) aufweisen, welcher selektiv mit einer Öse (632) oder einer Halteerhebung (633) zusammenwirkt.

7. Befestigungsvorrichtung nach Anspruch 1, **dadurch gekennzeichnet, dass** die Zugeinrichtungen (6) eine Stange (651) aufweisen, die selektiv in einem Feststellring (652) gleitet, welcher elastisch zu einer schrägen Position bezüglich der Stange (651) hin gespannt wird.

8. Befestigungsvorrichtung nach einem der vorhergehenden Ansprüche, **dadurch gekennzeichnet, dass** die erste und die zweite Gleitschiene (4a, 4b) in demselben dritten Teil (734a, 73b) definiert sind.

9. Anwendung der Befestigungsvorrichtung nach Anspruch 8 zur Befestigung einer Querstange auf einem Dach eines Kraftfahrzeugs, **dadurch gekennzeichnet, dass** die Mittelebene (M) eine quer zum Fahrzeug verlaufende Ebene ist, dass das erste Teil (1) vom Dach des Fahrzeugs gebildet wird, dass das zweite Teil (2) von der Stange gebildet wird, dass die erste und die zweite Nut (3a, 3b) von einem vierten Teil (74a, 74b) mit schwalbenschwanzförmigem Querschnitt definiert werden, das fest mit dem Dach (1) verbunden ist, und dass dabei ein Paar dritter Teile (73a, 73b) zum Einsatz kommt, welche an den jeweiligen Enden (2a, 2b) der Stange (2) befestigt sind, sowie ein Paar vierter Teile (74a, 74b), die am Dach gegenüber den jeweiligen Enden (2a, 2b) der Stange (2) befestigt sind.

10. Anwendung der Befestigungsvorrichtung nach einem der Ansprüche 1 bis 7 zur Befestigung einer Querstange auf dem Dach eines Kraftfahrzeugs, **dadurch gekennzeichnet, dass** die Mittelebene (M) eine Längsebene des Fahrzeugs ist, dass das erste Teil (1) vom Dach des Fahrzeugs gebildet wird, dass das zweite Teil (2) von der Stange gebildet wird, dass die erste und die zweite Gleitschiene (4a, 4b) jeweils in zwei Teilen definiert sind, welche ein Paar dritter Teile (73a, 73b) bilden, die an den jeweiligen Enden (2a, 2b) der Stange (2) befestigt sind, und dass die erste und die zweite Nut (3a, 3b) jeweils von zwei Teilen definiert werden, welche ein Paar vierter Teile (74a, 74b) bilden, die am Dach (1) gegenüber den jeweiligen Enden (2a, 2b) der Stange (2) befestigt sind.

## Claims

1. Device for fixing a second part (2) to a first part (1), **characterised in that** it comprises:
coplanar first and second grooves (3a, 3b), integral to the first part (1), opening in respectively opposed directions (X1, X2) and arranged symmetrically in relation to the median plane (M), these first and second grooves (3a, 3b) having first and second lips (31, 32) respectively separated from each other by a first distance (D1) and first and second seats (33, 34) respectively separated from each other by a second distance (D2) which is less than the first (D1);
roughly coplanar first and second slides (4a, 4b), integral to the second part (2) arranged symmetrically in relation to the median plane (M), having respective wide apart first and second ends (41, 42), respectively adjacent to the first and second grooves (3a, 3b), and respective first and second ends close together (43, 44), these slides (4a, 4b) converging with each other in the direction of the ends that are close together (43, 44);
first and second runners (5a, 5b) which are respectively mounted to slide in the first and second slides (4a, 4b), in which the adopt the respective first and second translation positions, these first and second runners (5a, 5b) having respective first and second hooking ends (51, 52) and respective first and second traction ends (53, 54), the respective first and second hooking ends (51, 52) being shaped in respective first and second hooks (510, 520) jutting out from the respective wide apart ends (41, 42) of the first and second slides (4a, 4b), being turned towards each other, and being spaced from each other by a variable distance (D) depending on the first and second translation positions, and the respective first and second traction ends (53, 54) jutting out from the respective close together ends (43, 44) of the first and second slides (4a, 4b);
and means of traction (6) working selectively with the respective traction ends (53, 54) of the first and second runners (5a, 5b), with the first and second runners (5a, 5b) being selectively moved in the respective slides (4a, 4b) between respective first and second unlocking translation positions, in which the hooks (510, 520) are separated from each other by a distance (D) greater than the first distance (D1) and the respective first and second locking translation positions, in which the means of traction (6) hold the respective traction ends (53, 54) of the first and second runners (5a, 5b) while the hooks (510, 520) are inserted in the respective first and second grooves (3a, 3b) and are separated from each other by a distance (D) included between the first and second distances (D1, D2).

2. Fixing device in accordance with claim 1, **characterised in that** the means of traction (6) comprise a cross-piece (610) linking the traction ends (53, 54) of the runners (5a, 5b) and in relation to which these traction ends (53, 54) are mounted to be sliding.

3. Fixing device in accordance with claim 1 or 2, **characterised in that** the means of traction (6) selectively shifts the first and second runners (5a, 5b) between their respective unlocking translation positions and their respective locking translation positions.

4. Fixing device in accordance with claim 3, **characterised in that** the means of traction (6) comprises a screw (611, 641) and nut (612, 642) drive mechanism.

5. Fixing device in accordance with claim 3 or 4, **characterised in that** the means of traction (6) comprises an eccentric cam (621) drive mechanism moved by a pivoting lever (622).

6. Fixing device in accordance with claim 1, **characterised in that** the means of traction (6) comprises a rocking retaining hook (631) working selectively with an eye (632) or a retaining lip (633).

7. Fixing device in accordance with claim 1, **characterised in that** the means of traction (6) comprises a rod (651) selectively fitted to slide in a locking ring (652) elastically drawn into an oblique position in comparison to the rod (651).

8. Fixing device in accordance with any of the preceding claims, **characterised in that** first and second slides (4a, 4b) are defined in a same third part (73a, 73b).

9. Application of the fixing device in accordance with claim 8 for fixing a transverse bar to a motor vehicle roof, **characterised in that** the median plane (M) is a plane transverse to the vehicle **in that** the first part (1) is constituted by the vehicle's roof, **in that** the second part (2) is constituted by the bar, **in that** the first and second grooves (3a, 3b) are defined by a fourth dovetail section part (74a, 74b) integral to the roof (1) and **in that** it brings into play a pair of third parts (73a, 73b) fixed to the respective ends (2a, 2b) of the bar (2) and a pair of fourth parts (74a, 74b) fixed to the roof opposite the respective ends (2a, 2b) of the bar (2).

10. Application of the fixing device in accordance with any of claims 1 to 7 for fixing a transverse bar to a motor vehicle roof, **characterised in that** the median plane (M) is a plane longitudinal to the vehicle, **in that** the first part (1) is constituted by the vehicle's roof, **in that** the second part (2) is constituted by the bar, **in that** the first and second slides (4a, 4b) are respectively defined in two parts forming a pair of third parts (73a, 73b) fixed to the respective ends (2a, 2b) of the bar (2) and **in that** the first and second grooves (3a, 3b) are respectively defined by two parts forming a pair of fourth parts (74a, 74b) fixed to the roof (1) opposite the respective ends (2a, 2b) of the bar (2).
